# EUROPEAN PATENT APPLICATION

(11) **EP 1 666 808 A1**
(43) Date of publication of application: **07.06.2006**
(21) Application number: 05380238.5
(22) Date of filing: 28.10.2005
(51) Int. Cl.: F24H 3/08, F28D 1/02

(54) **Heating apparatus**

(30) Priority: 26.11.2004 ES 200402849
(71) Applicant: Investigacion Y Desarrollo Electrico Asturiano, S.L., 33428 Llanera (ES)
(72) Inventor: Gonzalez Navarro, Jesús, 33428 Llanera (ES)
(74) Representative: SUGRANES - VERDONCES - FERREGÜELA

(57) **Abstract**

Radiant convector heating apparatus that comprises at least one contention chamber of a thermal fluid formed by the joining of several hollow aluminium elements provided with side ribs that determine, with the joining of said elements, ducts, by way of passages, that traverse said chamber in essentially vertical direction, by whose lower ends the room air penetrates and by whose upper ends said air that has been heated by contact with the walls and ribs of the contention chamber or chambers exits, the apparatus further being provided with a lower niche that houses a device to blow the air through said ducts, arranged under the lower ends thereof.

## Description

### Technical field of the invention

The present invention relates to a radiant convector heating apparatus, of the type that comprises at least one containment chamber for a thermal fluid which can be heated by an electrical resistor.

### Background of the invention

At present, heating apparatus are known, designed to heat the air of a room or similar, based on heat exchange by convection and radiation at the same time. Said apparatus combine the advantages associated with fan heaters and the oil filled radiators.

This type of apparatus comprises at least one containment chamber for a thermal fluid which can be heated by means of an electrical resistor and a device for the forced blowing of the air, which is directed against the containment chamber for its heating. With these characteristics the aim is to improve the output of fan heaters, which has the drawback of not permitting good uniformity of the room temperature and not having any thermal inertia as they stop functioning immediately after the apparatus is disconnected and the electrical resistor they incorporate is switched off, taking advantage of the inertia of the oil-filled radiators, which keep producing heat in the surroundings even when they are disconnected due to the heat accumulated by the mass of oil they contain.

This is the case of the mobile apparatus for heating rooms disclosed in patent document ES 2027416, which consists of a radiator defined by a series of radiation elements wherein there circulates an upper diathermic fluid, which is heated by means of an electrical resistor. This radiator is rigidly supported by a support body which houses therein and in its lower part, a fan heater unit with a fan and a set of resistors, which draws in the pre-heated air which freely reaches the set of radiation elements in order to be able to emit hot air, in a direction which is appreciably orthogonal to the radiator, through grilles arranged for said purpose in the lowest part of the radiator.

Nevertheless, said embodiments do not manage to greatly increase the heat exchange by forced ventilation of the air, as they do not achieve good distribution of the air current generated in contact with the radiation elements, so that this air can take sufficient heat from the oil stored either in the containment chamber or in said radiation elements. Furthermore, in the case of the mobile apparatus according to the patent document ES 2027416, the inclusion of incandescent resistors is required to heat the air blown by the fan, which represents a considerable consumption of energy in relation to its output.

### Explanation of the invention

The radiant convector heating apparatus of the invention comprises at least one thermal fluid containment chamber formed by the joining of several hollow aluminium elements provided with side ribs which determine, with the joining of said elements, ducts, by way of passages, which traverse said chamber in essentially vertical direction, by whose lower ends the air penetrates the room and by whose upper ends said air that has been heated by contact with the walls and ribs of the containment chamber or chambers exits.

In essence, the apparatus of the invention is characterized in that it is provided with a lower niche which houses a device to blow air through said ducts, arranged below the lower ends thereof.

In accordance with another characteristic of the invention, the lower niche is provided with at least one room air-suction grille arranged on the rear part of said niche and/or thereunder.

According to another characteristic of the invention, the apparatus comprises a dividing wall or sheet between the lower niche and the containment chamber, provided with an outlet whereby the air blown by the air-blowing device flows.

According to another characteristic of the invention, the ducts are provided with deflective elements designed to increase the residence time of the air inside the ducts, reducing its circulation rate and/or increasing the route thereof inside the ducts.

According to a preferred embodiment of the invention, said deflective elements are comprised of plates of corrugated cross-section.

According to another preferred embodiment, the same deflective elements are formed from plates of section configured in the form of a broken line, and preferably in the form of sawteeth.

According to another characteristic of the invention, the plates comprising the deflective elements are steel.

In accordance with another characteristic of the invention, the plates comprising the deflective elements are arranged floating inside the ducts, leaving a separation between the plates and the inner walls of the ducts for the passage, to both sides of each plate, of the air which circulates through said ducts.

According to a preferred embodiment, the plates comprising the deflective elements are essentially prolonged in a vertical direction from the lower niche, to which they are joined.

Preferably, the air-blowing device is adapted for the supply of air according to different degrees of intensity, by a speed variator applied to the air-blowing device.

In accordance with another characteristic of the invention, the apparatus comprises a temperature probe which controls the air-blowing device, that generates control signals, in accordance with the temperature, which cause the automatic variation in the speed of said air-blowing device.

In a preferred embodiment, the air-blowing device is a tangential fan whose axis is arranged perpendicular to the ducts, said fan being provided with a speed variator.

According to another characteristic of the invention, the apparatus comprises at least one electrical resistor capable of heating the thermal fluid contained en the containment chamber.

### Brief description of the drawings

The attached drawings illustrate, by way of non-limiting example, an embodiment of the radiant convector heating apparatus according to the invention. In said drawings:
- Fig. 1: is an elevational section of the profile of the lower half of the apparatus according to the invention;
- Fig. 2: is an elevational front view of the apparatus of Fig. 1, the internal components of the lowermost part of the apparatus being represented in broken lines and schematically;
- Fig. 3: is a side view of an element which forms the containment chamber and a support body of deflective elements, both separated; and
- Fig. 4: is a side view of the parts of Fig.3, in mutual coupling position.

### Detailed description of the drawings

The apparatus 1 represented in the drawings comprises a containment chamber 7 which stores a thermal fluid, such as, for example, oil, which is conventionally heated by electrical resistors, not represented.

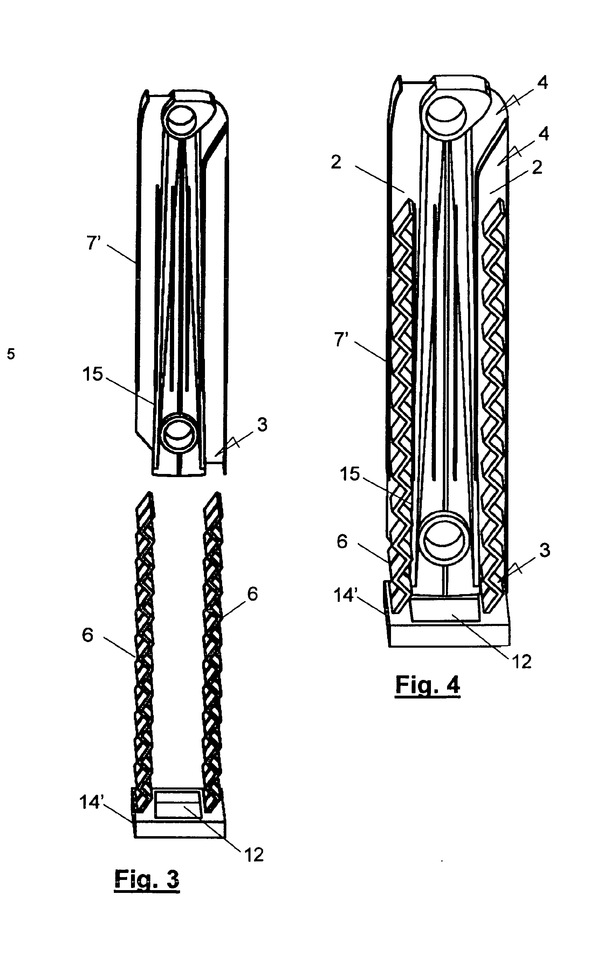

The containment chamber 7 is formed by the joining of several hollow aluminium elements provided with side ribs 15 (see Fig. 3 and 4) which determine, with the joining of said elements, ducts 2, by way of passages, which traverse said chamber in an essentially vertical direction. In normal conditions, the convection air is close to the apparatus due to a chimney effect via the lower ends 3 of said ducts 2, or passages, and after having heated up is delivered to the room via the upper open ends 4 of said ducts.

The apparatus 1 of the invention further incorporated a device 5 to blow air through these ducts 2, so that the circulation of the air through the ducts 2, may optionally be forced if said blowing device 5 is connected.

Specifically, the device 5 of the embodiment in the example is comprised of a tangential fan whose spin axis 9 is arranged horizontally and orthogonal to the ducts 2, and is able to blow air according to different intensities, by the inclusion of a selector device connected to a speed variator, that regulates the rotation speed of said fan.

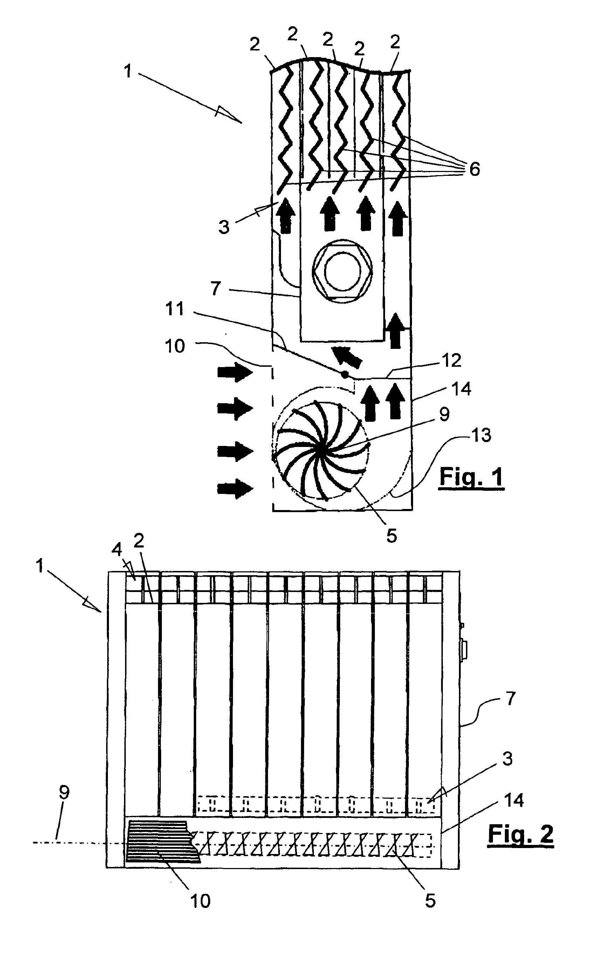

To guarantee heat exchange between the surface of the containment chamber 7 and the air that circulates through the ducts 2, at least part of the ducts 2 are provided, as is shown in Fig. 1, with deflective elements 6 comprised of steel plates whose cross-section has a broken-line configuration, their vertices being able to be slightly rounded or bevelled, said profile approximating that of corrugated profile. Naturally, the deflective elements can be comprised of another material, e.g. ABS.

The deflective elements 6 can be fastened to the walls of the ducts 2 or to any part of the apparatus body 1 so that the extension of the deflective elements 6 throughout the ducts 2 permit the passage of air to both sides of the plate comprising the deflective elements. It can therefore be said that said deflective elements are arranged floating inside the ducts 2.

Preferably, as is shown in Figs. 3 and 4, said deflective elements 6 extend from the body 14' of a lower niche 14, not represented, intended to house the blowing device 5 as will be described below, so that deflective elements can be incorporated, optionally, in apparatus comprised of hollow aluminium elements originally without said deflective elements 6. Figs. 3 and 4 represent just one hollow aluminium element 7', of those which comprise the containment chamber, for a better understanding of the apparatus assembly 1. Said Figs. Represent a hollow element 7' and a support body 14' of the deflective elements 6 in a position prior to coupling thereof and after their coupling, respectively in an apparatus 1 like that of the invention.

The inclusion of these deflective elements 6 achieves, despite there being a forced air circulation, increased residence time of the air that flows through the ducts 2, increasing the heat exchange between the thermal fluid and said air via the walls of the containment chamber 7, in comparison with the residence time that that would result from blowing the air through smooth ducts 2 without the incorporation of an element in the ducts, as is the case of the apparatus that forms part of the state of the art.

The apparatus 1 of the invention achieves, with the same calorific value to heat the fluid stored in the containment chamber 7 to control the heat emitted by the apparatus by varying the speed of the fan 5 and with help from the deflectors 6.

If deflective elements 6 are not incorporated, the forced circulation of the air through the ducts would be, especially when the apparatus 1 is connected, too quick, so that said air could not take sufficient heat from the heating fluid meaning that the apparatus 1 output would not increase despite increasing the speed at which the air passes through the ducts.

Indeed, as is known, a radiator that functions exclusively with oil needs a long time to reach operating conditions, from when the electrical resistor is activated, until heat starts being emitted by natural convection. By including the fan 5, the air is circulated through the ducts sooner, thus sooner establishing the recirculation of the room air through the apparatus 1. Furthermore, using the deflective elements 6 guarantees that the air that circulates through the ducts 2 is heated appropriately, taking maximum advantage of the heating power of the apparatus 1. This characteristic manages to increase the calorific value with the same measurements of the apparatus 1 while achieving better distribution of the air in the living space or room to heat.

The possibility of connecting the speed variator to a temperature probe is also incorporated in the apparatus 1, so that said probe generates a signal that automatically activates the fan, or varies its rotation rate, in accordance with the apparatus 1 temperature. Therefore, in start-up situations, when the apparatus 1 is still cold, the signal generated by the temperature probe reduces the rotation rate of the fan or stops it, reducing the air flow through the ducts 2 and more quickly increasing the apparatus 1 temperature. By contrast, when the apparatus 1 has reached optimum working temperature, the probe generates a signal that increases the rotation rate of the fan, increasing the hot air flow through the apparatus 1 outlet.

In accordance with Fig. 2, the apparatus 1 of the invention is provided with a lower niche, under the lower open ends 3 of the ducts 2, designed to house the fan 5, which draws in the air through a grille 10 preferably arranged on the rear part of the apparatus 1 at the level of the fan 5 blades, although it can also be arranged below the fan 5. As a dividing element between the niche that houses the fan 5 and the part of the apparatus 1 that comprises the containment chamber or chambers 7, the apparatus incorporates a dividing sheet 11 (see Fig. 1) provided with at least one outlet 12 whereby the air blown by the fan 5 flows and is channelled to the lower end 3 of the ducts 2. Likewise, the fan 5 it is provided with a casing 13, by way of a pressure chamber, adapted to collect the air drawn in and direct it to said outlet 12, whereby it is inserted in the ducts 2.

## Claims

1. Radiant convector heating apparatus (1) that comprises at least one containment chamber (7) of a thermal fluid formed by the joining of several hollow aluminium elements provided with side ribs that determine, with the joining of said elements, ducts (2), by way of a passage, that traverse said chamber in an essentially vertical direction, by whose lower ends (3) the room air penetrates and by whose upper ends (4) said air that has been heated by contact with the walls and ribs of the contention chamber or chambers exits, **characterized in that** it is provided with a lower niche (14) that houses a device (5) to blow the air through said ducts, arranged under the lower ends thereof.

2. Apparatus (1) according to claim 1, **characterized in that** the lower niche (14) is provided with at least one air suction grille (10) arranged on the rear part of said niche and/or thereunder.

3. Apparatus (1) according to claims 1 or 2, **characterized in that** it comprises a partition wall or sheet (11) between the lower niche (14) and the containment chamber (7), provided with of at least one outlet (12) whereby the air blown by the air-blowing device (5) flows.

4. Apparatus (1) according to the preceding claims, **characterized in that** the ducts (2) are provided with deflective elements (6) designed to increase the time the air remains inside the ducts, reducing its circulation rate and/or increasing the route thereof inside the ducts.

5. Apparatus (1) according to claim 4, **characterized in that** the deflective elements (6) are comprised of plates of corrugated cross section.

6. Apparatus (1) according to claim 4, **characterized in that** the deflective elements (6) are comprised of plates of cross section configured in the form of a broken line, and preferably in the form of sawteeth.

7. Apparatus (1) according to claim 6, **characterized in that** the plates comprising the deflective elements (6) are steel.

8. Apparatus (1) according to claim 4, **characterized in that** the plates comprising the deflective elements (6) are arranged floating inside the ducts (2), leaving a dividing space between the plates and the inner walls (8) of the ducts for the passage, to both sides of each layer, of the air that circulates through said ducts.

9. Apparatus (1) according to claim 4, **characterized in that** the plates comprising the deflective elements (6) are essentially prolonged in vertical direction from the lower niche (14), to which they are joined.

10. Apparatus (1) according to according to any one of the preceding claims **characterized in that** the air-blowing device (5) is adapted to supply the air according to different degrees of intensity.

11. Apparatus (1) according to claim 10, **characterized in that** it comprises a temperature probe which controls the air-blowing device (5), which generates control signals, in accordance with the temperature, which causes the automatic variation of the rate of said air-blowing device.

12. Apparatus according to any one of the preceding claims **characterized in that** the air-blowing device (5) is a tangential fan whose axis (9) is arranged essentially perpendicularly to the ducts (2), said fan being provided with a speed variator.

13. Apparatus according to any one of the preceding claims **characterized in that** it comprises at least one electrical resistor which can heat the thermal fluid contained in the containment chamber (7).
